Europäisches Patentamt

European Patent Office

Office européen des brevets

(19)

(11) Veröffentlichungsnummer: **0 209 633**
**B1**

(12) # EUROPÄISCHE PATENTSCHRIFT

(45) Veröffentlichungstag der Patentschrift:
**07.12.88**

(51) Int. Cl.⁴: **F 16 K 5/20**

(21) Anmeldenummer: **86103497.3**

(22) Anmeldetag: **14.03.86**

(54) **Absperrhahn mit kugelförmigem Küken.**

(30) Priorität: **13.05.85 CH 2033/85**

(43) Veröffentlichungstag der Anmeldung:
**28.01.87 Patentblatt 87/5**

(45) Bekanntmachung des Hinweises auf die Patenterteilung:
**07.12.88 Patentblatt 88/49**

(84) Benannte Vertragsstaaten:
**AT BE CH DE FR GB IT LI LU NL SE**

(56) Entgegenhaltungen:
**DE-A- 2 552 297**
**DE-A- 3 316 659**
**DE-A- 3 438 914**
**DE-C- 3 044 201**

(73) Patentinhaber: **GEORG FISCHER AKTIENGESELLSCHAFT, Mühlentalstrasse 105, CH-8201 Schaffhausen (CH)**

(72) Erfinder: **Davatz, Kaspar, Saluferstrasse 5, CH-7000 Chur (CH)**
Erfinder: **Hilpert, Bruno, Kirchgasse 3, CH-8253 Diessenhofen (CH)**
Erfinder: **Hunziker, Bruno, Hochstrasse 286, CH-8200 Schaffhausen (CH)**

## Beschreibung

Die Erfindung betrifft einen Absperrhahn mit kugelförmigem Küken, wie er im Oberbegriff von Anspruch 1 gekennzeichnet ist.

Ein Absperrhahn der eingangs genannten Art ist bekannt (DE-C2-3 044 201), wobei beim Lösen der Überwurfmutter durch Mitdrehen der Bundbuchse sich der Einschraubteil, insbesondere auch wegen dem grossen Gewindespiel, ebenfalls mitdreht, so dass sich die Dichtung vom Kugelküken abhebt und der Absperrhahn nicht mehr einwandfrei dichtet. Insbesondere bei Verwendung des Absperrhahnes für aggressive Medien kann dies gefährlich sein oder der Absperrhahn ist nur beschränkt verwendbar.

Aufgabe der vorliegenden Erfindung ist die Schaffung eines Absperrhahnes der eingangs genannten Art, welcher auch beim Abschrauben einer abflussseitigen Bundmutter und Lösen der Rohrleitung noch einwandfrei abdichtet. Ausserdem soll die Kükendichtung bei Verschleiss in einem Bereich selbstnachstellend ausgebildet sein.

Erfindungsgemäss wird diese Aufgabe durch die kennzeichnenden Merkmale von Anspruch 1 gelöst.

Besonders vorteilhafte Ausgestaltungen der Erfindung sind in den abhängigen Ansprüchen gekennzeichnet.

Durch die in der Steigungsrichtung gegenläufige Ausbildung des Innengewindes für den Dichtungsträger gegenüber dem Aussengewinde der Überwurfmutter am Gehäuse, kann sich beim Lösen der Überwurfmutter der Dichtungsträger beim allfälligen Mitdrehen sich nicht vom Küken weg nach aussen hin bewegen, so dass auch bei abgenommener ausflussseitigen Leitung der Absperrhahn immer einwandfrei dicht bleibt.

Die Ausbildung der Gewinde als Trapezgewinde ergeben eine für die Herstellung im Spritzgussverfahren günstige Form mit guten Bewegungs- und Festigkeitseigenschaften, wobei das Innengewinde für den Dichtungsträger vorteilhafterweise als Linksgewinde ausgebildet wird.

Durch die Anordnung eines Rundgummiringes zwischen der Küken-Dichtung und dem Dichtungsträger bzw. dem Gehäuse, sowie durch die vorteilhafte federnde Ausbildung des Dichtungsträgers durch Anordnung einer Ringnute, sind die Küken-Dichtungen vorspannbar, so dass deren Dichtwirkung auch nach Verschleiss der Dichtungen aufrechterhalten bleibt.

Die Erfindung ist in den beiliegenden Zeichnungen beispielsweise dargestellt und nachfolgend beschrieben.

Es zeigen:

Fig. 1 einen Längsschnitt durch einen Absperrhahn mit kugelförmigem Küken,

Fig. 2 eine Stirnansicht gemäss der Linie II-II von Fig. 1 mit weggelassener Überwurfmutter und Bundbuchse, und

Fig. 3 eine Draufsicht auf den Handhebel.

In den Zeichnungen ist mit 1 ein Gehäuse bezeichnet, welches einen rohrförmigen Ansatz 11 mit einer Bohrung 12 aufweist, in welcher ein Zapfen 3 drehbar gelagert ist, wobei an deren einen Ende des aus dem Ansatz 11 ragenden Zapfens 3 ein Handgriff 4 aufgesteckt und drehfest mit dem Zapfen 3 verbunden ist.

Das Gehäuse weist ferner eine zylindrisch ausgebildete Kammer 13 auf, in wecher ein kugelförmiges Küken 2 angeordnet ist. Das Küken 2 steht mit einem in die Kammer 13 ragenden Ende des Zapfens 3 drehfest in Eingriff, so dass es über den Zapfen 3 mit dem Handgriff 4 betätigbar ist. Zu beiden Seiten des Kükens 2 ist je eine Dichtung 20 anliegend am Küken 2 vorgesehen, welche auf einer Seite an einem Absatz 14 des Gehäuses 1 und auf der anderen Seite an einem Dichtungsträger 5 angeordnet ist. Der Dichtungsträger 5 weist ein Aussengewinde 51 auf, welches in ein am äusseren Ende der Kammer 13 angeordnetes Innengewinde 15 eingreift, wodurch der Dichtungsträger 5 soweit in das Gehäuse 1 eingeschraubt ist, dass die Dichtungen 20 am Küken 2 anliegen. Zwischen der Dichtung 20 und dem Dichtungsträger 5 bzw. dem Gehäuse-Absatz 14 ist jeweils ein Rundgummiring 21 angeordnet, welche durch entsprechendes Anziehen des Dichtungsträgers 5 so zusammengedrückt werden, dass sie mit einer Vorspannung die Dichtungen 20 gegen das Küken 2 drücken. Der Dichtungsträger 5 weist eine Durchgangsbohrung 56 und eine zylindrische Partie 52 auf, an deren Aussenumfang ein Dichtungsring 53 angeordnet ist. Zwischen der zylindrischen Partie 52 und dem Aussengewinde 51 ist eine Ringnute 54 am Aussenumfang angeordnet, deren Tiefe mindestens bis zu einem Drittel, vorzugsweise bis zur Hälfte des Ringquerschnittes des Dichtungsträgers 5 reicht. Dadurch ist die zylindrische Partie 52 derart federnd ausgebildet, dass sie bei Verspannung des Dichtungsträgers 5 mittels dem Aussengewinde 51 die Dichtung 20 auch bei deren Verschleiss noch gegen das Küken 2 drückt.

Der Dichtungsträger 5 ragt mit seinem äusseren, stirnseitigen Ende 55 über das Gehäuse 1 hinaus, wobei an der Stirnfläche 57 in einer Ringnute ein Dichtungsring 58 angeordnet ist.

Das Gehäuse 1 ist an beiden Enden mit einem Aussengewinde 19a, 19b versehen, auf welches jeweils eine mit einem nach innen gerichteten Flansch über eine Bundbuchse 7a, 7b greifende Überwurfmutter 6a, 6b aufgeschraubt ist. Die Bundbuchse 7a liegt dabei dichtend an der Stirnfläche 57 des Dichtungsträgers 5 und die Bundbuchse 7b an einer mit einem Dichtungsring 18 versehenen Stirnfläche 17 des Gehäuses 1 an.

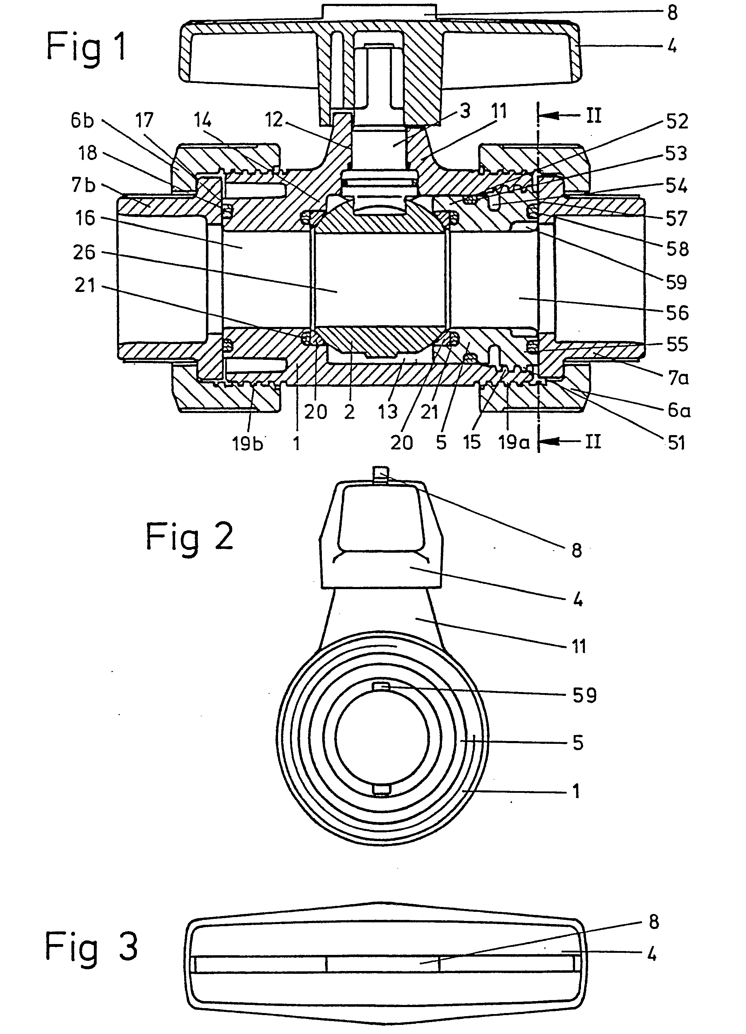

Die Durchgangsbvohrung 56 des Dichtungsträgers 5 bildet mit einer auf der anderen Seite des Gehäuses 1 angeordneten Durchgangsbohrung 16 und einer Durchgangsbohrung 26 des Kükens 2 bei der in Fig. 1 gezeigten Stellung des Kükens 2 eine durchgehende Öffnung für den Durchfluss des Mediums. Durch Drehung des Kükens 2 um 90° wird der Durchfluss gesperrt.

Zum Einschrauben des Dichtungsträgers 5 weist dieses an seinem stirnseitigen Ende 55 zwei gegenüberliegende Ausnehmungen 59 auf (siehe auch Fig. 2). Der abnehmbare Handgriff 4 ist hierfür als Schraubwerkzeug ausgebildet, wozu er auf seiner oberen Seite einen Steg 8 aufweist, welcher gemäss Fig. 3 eine derartige Länge und Breite aufweist, dass er in die beiden Ausnehmungen 59 steckbar ist und der Dichtungsträger 5 mittels des Handgriffes 4 verdrehbar ist.

Die Steigungsrichtung des Innengewindes 15 ist zu der Steigungsrichtung des Aussengewindes 19 gegenläufig ausgebildet. Beispielsweise hat das für die Überwurfmuttern 6 vorgesehene Aussengewinde 19 eine übliche rechtsgängige Steigung und das für den Dichtungsträger 5 vorgesehene Innengewinde 15 eine linksgängige Steigung. Beide Gewinde sind beispielsweise als Trapezgewinde ausgebildet, welches das für die Herstellung und Montage notwendige Spiel aufweist.

Damit der Absperrhahn auch für aggressive Medien verwendbar ist, werden seine Teile beispielsweise aus einem gegen diese Medien beständigen Kunststoff wie z.B. Polyvinylchlorid hergestellt, wobei meist alle Teile, auch die Gewinde, im Spritzgussverfahren ohne mechanische Nacharbeit herstellbar sind.

Der Absperrhahn kann auch symmetrisch ausgebildet sein, so dass er beidseits des Kükens einen jeweils die Dichtung aufnehmenden Dichtungsträger aufweist, welcher mittels eines gegenüber dem Gewinde für die Überwurfmutter gegenläufigen Gewindes in das Gehäuse eingeschraubt ist.

## Patentansprüche

1. Absperrhahn mit einem kugelförmigen Küken (2), welches in einem, eine Kammer (13) aufweisenden Gehäuse (1) angeordnet ist, dessen Enden je ein Aussengewinde (19a, 19b) für eine, eine Bundbuchse (7a, 7b) haltende Überwurfmutter (6a, 6b) aufweisen, mit beidseits des Kükens (2) angeordneten Dichtungen (20), wobei mindestens an einer Seite die Dichtung (20) an einem in ein Innengewinde (15) des Gehäuses (1) eingeschraubten Dichtungsträger (5) angeordnet ist, und wobei mindestens eine Bundbuchse (7a) am äusseren, stirnseitigen Ende (57) des Dichtungsträgers (5) dichtend anliegt, dadurch gekennzeichnet, dass das Innengewinde (15) für den Dichtungsträger (5) eine gegenüber dem Aussengewinde (19a) für die Überwurfmutter (6a) gegenläufige Steigungsrichtung aufweist.

2. Absperrhahn nach Anspruch 1, dadurch gekennzeichnet, dass das Innengewinde (15) linksgängig ist und dass beide Gewinde (15, 19) als Trapezgewinde ausgebildet sind.

3. Absperrhahn nach einem der Ansprüche 1 oder 2, dadurch gekennzeichnet, dass zwischen der Dichtung (20) für das Küken (2) und dem Dichtungsträger (5) bzw. dem Gehäuse (1) ein, eine Vorspannung erzeugender Rundgummiring (21) angeordnet ist.

4. Absperrhahn nach einem der Ansprüche 1 bis 3, dadurch gekennzeichnet, dass der Dichtungsträger (5) zwischen dem Aussengewinde (51) und einer zylindrischen Partie (52) eine Ringnute (54) am Aussenumfang aufweist.

5. Absperrhahn nach Anspruch 4, dadurch gekennzeichnet, dass die Ringnute (54) eine Tiefe aufweist, welche mindestens bis zu einem Drittel, vorzugsweise bis zur Hälfte des Ringquerschnittes des Dichtungsträgers (5) reicht.

6. Absperrhahn nach einem der Ansprüche 1 bis 5, dadurch gekennzeichnet, dass der Dichtungsträger (5) an dem äusseren, stirnseitigen Ende (55) zwei gegenüberliegende Ausnehmungen (59) aufweist und dass der für die Betätigung des Kükens von einem Zapfen (3) abnehmbare Handgriff (4) als Schraubwerkzeug ausgebildet an seiner oberen Seite einen Steg (8) aufweist, welcher in die Ausnehmungen (59) steckbar ist.

## Claims

1. A stop valve having a spherical plug (2) arranged in a housing (1) with a recess (13), the ends of which housing each have an external thread (19a, 19b) for a clamping nut (6a, 6b) supporting a flange bushing (7a, 7b) with seals (20) arranged on both sides of the plug (2), wherein at least on one side the seal (20) is arranged on a seal carrier (5) which is screwed into an internal thread (15) of the housing (1) and wherein at least one flange bushing (7a) fits sealingly against the outer front end (57) of the seal carrier (5), characterised in that the pitch direction of the internal thread (15) For the seal carrier (5) runs in the opposite direction to that of the external thread (19a) for the clamping nut (6a).

2. Stop valve according to claim 1, characterised in that the internal thread (15) has a left hand pitch and in that both threads (15, 19) are constructed as trapezoidal threads.

3. Stop valve according to one of claims 1 or 2, characterised in that between the seal (20) for the plug (2) and the seal carrier (5) or the housing (1) a circular rubber ring (21) is arranged so as to produce a pre-stress.

4. Stop valve according to one of claims 1 to 3, characterised in that the seal carrier (5) has an annular groove (54) on its outer perimeter between the external thread (51) and a cylindrical portion (52).

5. Stop valve according to claim 4, characterised in that the annular groove (54) has a depth of at least a third and preferably a half of the transverse section of the seal carrier (5).

6. Stop valve according to one of claims 1 to 5, characterised in that the seal carrier (5) has on its outer front end (55) two opposed recesses (59) and in that the handle (4) for operating the plug, which handle can be detached from the tap (3), is constructed as a screw driving implement, having on its upper side a cross prip (8) which can be inserted into the recesses (59).

## Revendications

1. Robinet d'arrêt comportant un boisseau sphérique (2) qui est logé dans un corps (1) muni d'une chambre (13) et dont les extrémités sont respectivement dotées d'un filetage (19a, 19b) pour un écrou d'accouplement (6a, 6b) maintenant une douille à collet (7a, 7b), des joints (20) étant installés des deux côtés du boisseau (2), le joint (20), au moins sur un côté (20), étant disposé sur un porte-joint (5) vissé dans un taraudage (15) du corps (1), et au moins une douille à collet (7a) étant appliquée de façon étanche sur l'extrémité frontale externe (57) du porte-joint (5), caractérisé par le fait que le taraudage (15) pour le porte-joint (5) comporte a un pas de sens opposé au filetage (19a) pour l'écrou d'accouplement (6a).

2. Robinet d'arrêt selon la revendication 1, caractérisé par le fait que le taraudage (15) a un pas à gauche et que les deux filetages (15, 19) sont réalisés sous la forme de filetages trapézoïdaux.

3. Robinet d'arrêt selon l'une des revendications 1 ou 2, caractérisé par le fait qu'une garniture toroïdale en caoutchouc (21), produisant une précontrainte, est interposée entre le joint (20) pour le boisseau (2) et le support de joint (5) ou le corps (1).

4. Robinet d'arrêt selon l'une des revendications 1 à 3, caractérisé par le fait que le porte-joint (5), entre le filetage (51) et une partie cylindrique (52), comporte une rainure annulaire (54) sur la périphérie externe.

5. Robinet d'arrêt selon la revendication 4, caractérisé par le fait que la rainure annulaire (54) a une profondeur qui s'étend au moins jusqu'à un tiers, de préférence jusqu'à la moitié, de la section transversale annulaire du porte-joint (5).

6. Robinet d'arrêt selon l'une des revendications 1 à 5, caractérisé par le fait que le porte-joint (5), sur son extrémité externe, côté frontal (55), comporte deux évidements opposé (59) et que la poignée amovible, pour l'actionnement du boisseau par un tourillon (3) et réalisée sous la forme d'un outil de manoeuvre des vis et des écrous, comporte sur sa surface supérieure une barrette (8) qui peut être engagée dans les évidements (59).

**Fig 1**

**Fig 2**

**Fig 3**

5